# FASCICULE DE BREVET EUROPEEN

(11) **EP 3 678 910 B1**
(45) Date de publication et mention de la délivrance du brevet: **11.08.2021**
(21) Numéro de dépôt: 18773795.2
(22) Date de dépôt: 28.08.2018
(51) Int. Cl.: B60W 20/11, B60K 6/12, B60K 6/48, B60W 10/04, B60W 10/08

(54) **PROCÉDÉ DE CONTRÔLE DE FOURNITURE D'UN COUPLE COMPLÉMENTAIRE PAR UNE MACHINE MOTRICE NON-THERMIQUE D'UN VÉHICULE HYBRIDE EN FONCTION DU POTENTIEL D'ACCÉLÉRATION**
VERFAHREN ZUR BEREITSTELLUNG EINES ZUSÄTZLICHEN, NICHT-VERBRENNUNGSMOTORISCHEN DREHMOMENTS IN EINEM HYBRIDFAHRZEUG IN ABHÄNGIGKEIT VOM BESCHLEUNIGUNGSPOTENTIAL
CONTROL METHOD FOR DELIVERY OF A COMPLEMENTARY TORQUE FROM A NON-COMBUSTION POWER SOURCE OF A HYBRID VEHICLE DEPENDING ON AN ACCELERATION POTENTIAL

(30) Priorité: 08.09.2017 FR 1758309
(43) Date de publication de la demande: 15.07.2020
(73) Titulaire: PSA Automobiles SA, 78300 Poissy (FR)
(72) Inventeur: COZ, Emmanuel, 92190 Meudon (FR)
(86) Numéro de dépôt international: PCT/FR2018/052112
(87) Numéro de publication internationale: WO 2019/048756

(56) Documents cités:
- DE-A1-102006 013 677
- DE-A1-102009 046 368
- DE-A1-102015 110 897

## Description

L'invention concerne les véhicules qui comprennent une chaîne de transmission hybride comportant un moteur thermique et une machine motrice non-thermique consommant respectivement du carburant et de la puissance d'au moins un moyen de stockage d'énergie pour fournir des couples, ensemble ou séparément, pour au moins un train.

Dans ce qui suit, on entend par « moyen de stockage d'énergie » aussi bien un moyen de stockage d'énergie électrique qu'un moyen de stockage d'énergie hydraulique ou pneumatique.

Par ailleurs, on notera que l'invention concerne aussi bien le cas dans lequel le moteur thermique et la machine motrice non-thermique fournissent deux couples pour un même train que le cas dans lequel le moteur thermique et la machine motrice non-thermique fournissent deux couples respectivement pour deux trains.

Dans un véhicule hybride du type de celui défini ci-avant, l'intégralité de la puissance disponible du moyen de stockage d'énergie (ou « stockeur ») est généralement mise à la disposition de la machine motrice non-thermique afin de satisfaire au mieux le conducteur.

Par conséquent, lorsque seul le moteur thermique fournit du couple et que le conducteur augmente le pourcentage d'enfoncement de la pédale d'accélérateur pour signaler qu'il souhaite une accélération complémentaire, le calculateur de supervision de la chaîne de transmission hybride autorise la machine motrice non-thermique à consommer de l'énergie stockée dans le moyen de stockage d'énergie associé pour fournir un couple complémentaire (ou « boost ») susceptible d'induire cette accélération complémentaire dès lors que la puissance disponible dans ce moyen de stockage d'énergie le permet. Ce mode de contrôle du couple complémentaire fourni est notamment décrit dans le document brevet FR 3041308.

On connait en outre le document de brevet DE-A1-10 2015 110897 divulguant le préambule de la revendication 1.

Dans certaines situations de vie (comme par exemple en présence d'une vitesse du véhicule élevée, typiquement supérieure à 100 km/h), l'accélération complémentaire induite par le couple complémentaire (ou boost) n'est pas suffisamment forte pour être ressentie par le conducteur. Or, avec le fonctionnement actuel, l'énergie stockée dans le moyen de stockage d'énergie est utilisée pour produire un couple complémentaire, ce qui induit une consommation « inutile », alors que cette énergie aurait pu être utilisée plus tard, et notamment dans une situation de vie où le conducteur aurait nettement ressenti l'effet de son utilisation, par exemple dans le cadre d'un boost.

L'invention a donc notamment pour but d'améliorer la situation dans les véhicules hybrides.

Elle propose notamment à cet effet un procédé de contrôle destiné à être mis en oeuvre dans un véhicule comprenant au moins un moyen de stockage d'énergie ayant une puissance disponible, et un moteur thermique et une machine motrice non-thermique fournissant respectivement des couples pour au moins un train en consommant respectivement du carburant et de la puissance du moyen de stockage d'énergie.

Ce procédé de contrôle se caractérise par le fait qu'il comprend une étape dans laquelle, lorsque seul le moteur thermique fournit du couple pour le train :
- on estime une valeur représentative d'un potentiel d'accélération du véhicule en cas de fourniture d'un couple complémentaire par la machine motrice non-thermique, en fonction d'au moins un paramètre du véhicule, et
- on autorise cette fourniture de couple complémentaire lorsque cette valeur estimée est supérieure à un seuil choisi.

On entend ici par « potentiel d'accélération » la valeur de l'augmentation de l'accélération que pourrait induire la machine motrice non-thermique si elle produisait un couple complémentaire en consommant de l'énergie stockée dans le moyen de stockage d'énergie, compte tenu de la situation de vie en cours dans le véhicule.

Grâce à l'estimation de ce potentiel d'accélération on peut désormais décider de produire du couple complémentaire lorsque cela s'avère vraiment utile au regard de la situation de vie en cours, ce qui évite de consommer inutilement de l'énergie stockée dans le moyen de stockage d'énergie.

Le procédé de contrôle selon l'invention peut comporter d'autres caractéristiques qui peuvent être prises séparément ou en combinaison, et notamment :
- dans son étape on peut utiliser un seuil qui est choisi en fonction d'un pourcentage d'enfoncement d'une pédale d'accélérateur du véhicule et/ou d'un mode de fonctionnement sélectionné pour le véhicule ;
- dans son étape on peut estimer la valeur en fonction d'au moins un paramètre du véhicule qui est choisi parmi au moins une caractéristique technique du véhicule, une vitesse en cours du véhicule, un rapport engagé dans des moyens de changement de rapport du véhicule, une pente en cours d'une portion de voie de circulation sur laquelle circule le véhicule, un poids en cours du véhicule, une information météorologique, une altitude à laquelle est situé le véhicule, et un mode de fonctionnement sélectionné pour le véhicule ;
- dans son étape le mode de fonctionnement du véhicule peut être choisi parmi un mode de roulage, lui-même choisi parmi un roulage à deux roues motrices et un roulage à quatre roues motrices, et un mode de conduite, lui-même choisi parmi un mode économique, un mode automatique et un mode sportif ;
- dans son étape on peut estimer la valeur lorsqu'en outre un conducteur du véhicule vient d'augmenter un pourcentage d'enfoncement d'une pédale d'accélérateur du véhicule pour signaler qu'il souhaite une accélération complémentaire.

L'invention propose également un dispositif de contrôle destiné à équiper un véhicule comprenant au moins un moyen de stockage d'énergie ayant une puissance disponible, et un moteur thermique et une machine motrice non-thermique fournissant respectivement des couples pour au moins un train en consommant respectivement du carburant et de la puissance de ce moyen de stockage d'énergie.

Ce dispositif de contrôle se caractérise par le fait qu'il comprend des moyens mettant en œuvre l'étape d'un procédé de contrôle du type de celui présenté ci-avant.

L'invention propose également un véhicule, éventuellement de type automobile, et comprenant au moins un moyen de stockage d'énergie ayant une puissance disponible, un moteur thermique et une machine motrice non-thermique fournissant respectivement des couples pour au moins un train en consommant respectivement du carburant et de la puissance du moyen de stockage d'énergie, et un dispositif de contrôle du type de celui présenté ci-avant.

Par exemple, la machine motrice non-thermique de ce véhicule peut être de type électrique. Dans ce cas, le moyen de stockage d'énergie stocke de l'énergie électrique.

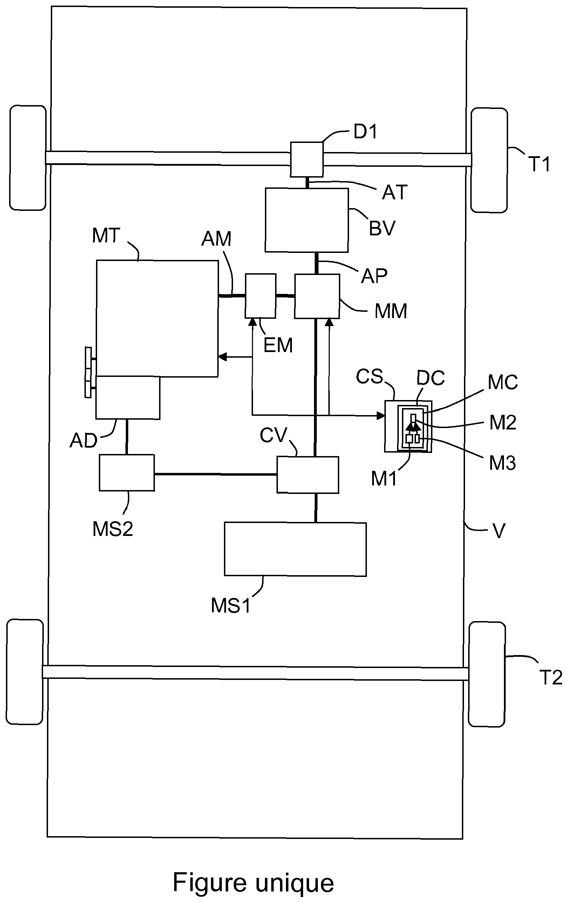

D'autres caractéristiques et avantages de l'invention apparaîtront à l'examen de la description détaillée ci-après, et du dessin annexé, sur lequel l'unique figure illustre schématiquement et fonctionnellement un véhicule comprenant une chaîne de transmission hybride et un calculateur de supervision équipé d'un dispositif de contrôle selon l'invention.

L'invention a notamment pour but de proposer un procédé de contrôle destiné à être mis en œuvre dans un véhicule V comprenant une chaîne de transmission hybride comportant un moteur thermique MT et une machine motrice non-thermique MM fournissant respectivement des couples pour au moins un train T1 en consommant respectivement du carburant et de la puissance d'au moins un premier moyen de stockage d'énergie MS1. Elle propose également un dispositif de contrôle DC destiné à mettre en œuvre le procédé de contrôle au sein d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule hybride comportant au moins un moteur thermique et une machine motrice non-thermique fournissant des couples pour au moins un train (ou analogue). Par conséquent, l'invention concerne non seulement les véhicules terrestres, mais également les bateaux et les avions.

On entend ici par « machine motrice non-thermique » une machine agencée de manière à fournir ou récupérer du couple pour déplacer un véhicule, soit seule soit en complément d'un moteur thermique. Il pourra par exemple s'agir d'une machine (ou moteur) électrique, d'une machine hydraulique, d'une machine pneumatique (ou à air comprimé), ou d'un volant d'inertie.

Par ailleurs, on entend ici par « moteur thermique » une machine ou un moteur consommant du carburant pour produire du couple pour déplacer un véhicule.

On a schématiquement représenté sur l'unique figure un véhicule V comprenant une chaîne de transmission hybride, un calculateur de supervision CS propre à superviser (ou gérer) le fonctionnement de la chaîne de transmission, et un dispositif de contrôle DC selon l'invention.

La chaîne de transmission hybride comprend ici, notamment, un moteur thermique MT, un arbre moteur AM, un embrayage EM, une machine motrice non-thermique MM, des moyens de changement de rapport BV, un premier moyen de stockage d'énergie MS1 et un arbre de transmission AT.

Le moteur thermique MT comprend un vilebrequin (non représenté) qui est solidarisé fixement à l'arbre moteur AM afin d'entraîner ce dernier (AM) en rotation. Il est destiné à fournir du couple pour au moins un premier train T1 (ici de roues), via l'embrayage EM, la machine motrice (non-thermique) MM, et les moyens de changement de rapport BV. Mais dans une variante de réalisation il pourrait fournir du couple pour au moins un train via l'embrayage EM et les moyens de changement de rapport BV.

Le premier train T1 est, par exemple, situé à l'avant du véhicule V, et couplé à l'arbre de transmission AT, de préférence, et comme illustré, via un différentiel (ici avant) D1. Mais dans une variante ce premier train T1 pourrait être situé à l'arrière du véhicule V.

L'embrayage EM est chargé de coupler/découpler l'arbre moteur AM (couplé au moteur thermique MT) à/de la machine motrice MM, sur ordre du calculateur de supervision CS, afin de communiquer du couple qu'elle produit. Cet embrayage EM peut être de tout type dès lors qu'il peut prendre au moins un premier état (couplé) dans lequel il assure le couplage entre le moteur thermique MT et la machine motrice MM, et un deuxième état (découplé) dans lequel il découple le moteur thermique MT de la machine motrice MM.

La machine motrice MM est couplée au premier moyen de stockage d'énergie MS1 afin d'être alimentée en énergie ou d'alimenter ce dernier (MS1) en énergie. Elle est également couplée à la sortie de l'embrayage EM et à l'arbre primaire AP des moyens de changement de rapport BV.

Dans ce qui suit on considère, à titre d'exemple non limitatif, que la machine motrice MM est de type électrique. Mais l'invention n'est pas limitée à ce type de machine motrice non-thermique. Ainsi, elle concerne également et notamment les machines (ou moteurs) hydrauliques, les machines (ou moteurs) pneumatiques (ou à air comprimé), et les volants d'inertie.

Comme on considère ici que la machine motrice MM est de type électrique, le premier moyen de stockage d'énergie MS1 qui l'alimente en énergie est agencé pour stocker de l'énergie électrique, par exemple en basse tension (typiquement 220 V à titre illustratif).

Les moyens de changement de rapport BV peuvent, par exemple, être agencés sous la forme d'une boîte de vitesses. Ils comprennent l'arbre primaire AP qui est destiné à recevoir du couple de la machine motrice MM, et un arbre secondaire destiné à recevoir ce couple via l'arbre primaire AP afin de le communiquer à l'arbre de transmission AT auquel il est couplé et qui est couplé indirectement aux roues motrices (ici avant) du véhicule V via le différentiel D1. Mais dans une variante de réalisation les moyens de changement de rapport BV pourraient, par exemple, comprendre au moins un train épicycloïdal comprenant un, deux ou trois synchronisateurs. On notera que les moyens de changement de rapport BV doivent proposer au moins un rapport.

Comme illustré non limitativement sur l'unique figure, la chaîne de transmission peut aussi comprendre un démarreur ou un alterno-démarreur AD couplé au moteur thermique MT et chargé de lancer ce dernier (MT) afin de lui permettre de démarrer. Ce lancement se fait grâce à de l'énergie électrique qui est, par exemple et comme illustré non limitativement, stockée dans un second moyen de stockage MS2.

Ce second moyen de stockage MS2 peut être agencé sous la forme d'une batterie très basse tension (par exemple 12 V, 24 V ou 48V). Cette dernière (MS2) peut, par exemple, alimenter un réseau de bord auquel sont connectés des équipements électriques du véhicule V. On notera que le second moyen de stockage MS2 peut, comme illustré non limitativement, être couplé au premier moyen de stockage d'énergie MS1 et à la machine motrice MM via un convertisseur CV de type DC/DC, afin de pouvoir être rechargé.

Les fonctionnements d'au moins le moteur thermique MT et la machine motrice MM, ainsi qu'éventuellement de l'embrayage EM et/ou des moyens de changement de rapport BV, peuvent être contrôlés par le calculateur de supervision CS.

Comme indiqué précédemment, l'invention propose un procédé de contrôle destiné à être mis en œuvre dans le véhicule V afin de contrôler les compléments de couple (ou boosts) que peut fournir sa machine motrice MM lorsque seul son moteur thermique MT est en train de fournir du couple (ici) au premier train T1.

Ce procédé de contrôle peut être mis en œuvre au moyen du dispositif de contrôle DC qui comprend au moins des moyens de contrôle MC à cet effet.

On notera que dans l'exemple non limitatif illustré sur l'unique figure, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, comprend une étape qui est mise en œuvre à l'initiative du dispositif de contrôle DC lorsqu'au moins le moteur thermique MT est seul à fournir du couple (ici) au premier train T1, en consommant du carburant.

Dans cette étape, chaque fois que cette condition est présente, on (les moyens de contrôle MC) estime(nt) une valeur vpa qui est représentative d'un potentiel d'accélération du véhicule V en cas de fourniture d'un couple complémentaire cc par la machine motrice non-thermique MM, en fonction d'au moins un paramètre du véhicule V. Puis, on (les moyens de contrôle MC) autorise(nt) cette fourniture de couple complémentaire cc lorsque cette valeur estimée vpa est supérieure à un seuil spa choisi.

Le dispositif de contrôle DC informe alors le calculateur de supervision CS que la machine motrice non-thermique MM est autorisée à fournir un couple complémentaire cc. Dans le cas contraire (vpa < spa) le dispositif de contrôle DC informe le calculateur de supervision CS que la machine motrice non-thermique MM n'est pas autorisée à fournir un couple complémentaire cc.

On entend ici par « potentiel d'accélération » la valeur de l'augmentation de l'accélération que pourrait induire la machine motrice non-thermique MM si elle produisait un couple complémentaire cc en consommant de l'énergie stockée dans le premier moyen de stockage d'énergie MS1, compte tenu de la situation de vie en cours dans le véhicule V.

Grâce à l'invention, on peut désormais décider de produire du couple complémentaire cc lorsque le potentiel d'accélération sera suffisamment important pour être ressenti par le conducteur du véhicule V, compte tenu de la situation de vie en cours. Cela permet avantageusement d'éviter de consommer inutilement de l'énergie, stockée dans le premier moyen de stockage d'énergie MS1, en vue d'une utilisation ultérieure, et notamment dans une situation de vie où le conducteur ressentira immédiatement l'effet de son utilisation, par exemple dans le cadre d'un boost.

Comme illustré non limitativement sur l'unique figure, les moyens de contrôle MC peuvent, par exemple, comprendre un premier module M1 chargé d'estimer chaque valeur vpa en fonction d'au moins un paramètre du véhicule V, et un deuxième module M2 chargé de comparer chaque valeur estimée vpa au seuil choisi spa et de décider d'autoriser ou d'interdire la fourniture d'un couple complémentaire cc en fonction du résultat de cette comparaison.

Par exemple, dans l'étape du procédé de contrôle, on (les moyens de contrôle MC) peu(ven)t utiliser un seuil spa qui est choisi en fonction du pourcentage d'enfoncement de la pédale d'accélérateur du véhicule V et/ou du mode de fonctionnement qui a été sélectionné par le conducteur pour le véhicule V.

Ce mode de fonctionnement du véhicule V peut, par exemple, être choisi parmi un mode de roulage et un mode de conduite. Ce mode de conduite peut être choisi parmi un mode économique, un mode automatique et un mode sportif.

On comprendra que dans un mode de conduite sportif, le conducteur s'attend à ressentir de plus fortes accélérations que dans le mode de conduite automatique, et de beaucoup plus fortes accélérations que dans le mode de conduite économique. Par conséquent, pour un même couple complémentaire cc produit, le conducteur ressentira plus facilement son effet sur l'accélération du véhicule V lors d'une sélection du mode de conduite économique que lors d'une sélection du mode de conduite automatique, et a fortiori que lors d'une sélection du mode de conduite sportif. A iso-couple complémentaire, le ressenti sera identique pour le conducteur. Par contre, en fonction du mode de conduite sélectionné, on pourra autoriser plus ou moins de couple complémentaire. De ce fait, on peut utiliser des seuils spa différents selon que le mode de conduite sélectionné pour le véhicule V est économique, automatique ou sportif.

D'une manière générale, on considère que le seuil spa doit être au moins égal à 0,2 m.s⁻².

Comme illustré non limitativement sur l'unique figure, les moyens de contrôle MC peuvent, par exemple, comprendre un troisième module M3 chargé de choisir, éventuellement au moyen d'un calcul, le seuil spa.

Egalement par exemple, dans l'étape du procédé de contrôle, on (les moyens de contrôle MC (et plus précisément leur premier module M1)) peu(ven)t estimer la valeur vpa en fonction d'au moins un paramètre du véhicule V choisi parmi au moins une caractéristique technique du véhicule V, une vitesse en cours du véhicule V, un rapport engagé dans les moyens de changement de rapport BV, la pente en cours de la portion de voie de circulation sur laquelle circule le véhicule V, le poids en cours du véhicule V, une information météorologique, l'altitude à laquelle est situé le véhicule V, le mode de fonctionnement sélectionné pour le véhicule V (présenté ci-avant), le rendement de la chaîne de transmission (et notamment de la boîte de vitesses), et la résistance au roulement des pneus.

Parmi les caractéristiques techniques du véhicule V qui peuvent être prises en compte, on peut notamment citer le couple de la machine motrice non-thermique MM qui dépend des caractéristiques de cette dernière (notamment son rendement et sa thermique) et de la puissance maximale du premier moyen de stockage d'énergie MS1.

Les valeurs en cours de tous ces paramètres du véhicule V précités sont facilement accessibles au calculateur de supervision CS.

De préférence, on (le premier module M1) utilisera plusieurs paramètres du véhicule V parmi ceux cités dans le paragraphe précédent pour estimer la valeur vpa, car plus ils sont nombreux, plus la valeur estimée vpa est représentative du potentiel d'accélération effectif du véhicule V à l'instant considéré.

On notera que dans l'étape du procédé de contrôle, on (les moyens de contrôle MC (et plus précisément leur premier module M1)) peu(ven)t estimer la valeur vpa lorsqu'en outre le conducteur du véhicule V vient d'augmenter le pourcentage d'enfoncement de la pédale d'accélérateur pour signaler qu'il souhaite une accélération complémentaire.

En présence de cette dernière option, la valeur vpa est donc estimée lorsque seul le moteur thermique MT fournit du couple (ici) au premier train T1 et que dans le même temps le dispositif de contrôle DC a été informé du fait que le conducteur souhaitait une accélération complémentaire. Mais en l'absence de cette option, la valeur vpa est systématiquement estimée lorsque seul le moteur thermique MT fournit du couple (ici) au premier train T1, afin d'être immédiatement disponible et donc comparable au seuil spa lorsque le conducteur souhaite une accélération complémentaire.

On notera également que le dispositif de contrôle DC peut être agencé de manière à avertir le conducteur du véhicule V lorsqu'il estime que la production d'un couple complémentaire cc serait inutile au regard de la situation de vie en cours. Cet avertissement peut se faire par diffusion d'un message sonore via au moins un haut-parleur du véhicule V et/ou affichage d'un message textuel sur au moins un écran du véhicule V.

## Revendications

1. Procédé de contrôle pour un véhicule (V) comprenant au moins un moyen de stockage d'énergie (MS1) ayant une puissance disponible, et un moteur thermique (MT) et une machine motrice non-thermique (MM) fournissant respectivement des couples pour au moins un train (T1) en consommant respectivement du carburant et de la puissance dudit moyen de stockage d'énergie (MS1), **caractérisé en ce qu'**il comprend une étape dans laquelle, lorsque seul ledit moteur thermique (MT) fournit du couple, on estime une valeur représentative d'un potentiel d'accélération dudit véhicule (V) en cas de fourniture d'un couple complémentaire par ladite machine motrice non-thermique (MM), en fonction d'au moins un paramètre dudit véhicule (V), et on autorise cette fourniture de couple complémentaire lorsque ladite valeur estimée est supérieure à un seuil choisi.

2. Procédé selon la revendication 1, **caractérisé en ce que** dans ladite étape on utilise un seuil choisi en fonction d'un pourcentage d'enfoncement d'une pédale d'accélérateur dudit véhicule (V) et/ou d'un mode de fonctionnement sélectionné pour ledit véhicule (V).

3. Procédé selon la revendication 1 ou 2, **caractérisé en ce que** dans ladite étape on estime ladite valeur en fonction d'au moins un paramètre dudit véhicule (V) choisi parmi au moins une caractéristique technique dudit véhicule (V), une vitesse en cours dudit véhicule (V), un rapport engagé dans des moyens de changement de rapport (BV) dudit véhicule (V), une pente en cours d'une portion de voie de circulation sur laquelle circule ledit véhicule (V), un poids en cours dudit véhicule (V), une information météorologique, une altitude à laquelle est situé ledit véhicule (V), un mode de fonctionnement sélectionné pour ledit véhicule (V), un rendement d'une chaîne de transmission dudit véhicule (V), et une résistance au roulement de pneus dudit véhicule (V).

4. Procédé selon la revendication 2 ou 3, **caractérisé en ce que** dans ladite étape ledit mode de fonctionnement du véhicule (V) est choisi parmi un mode de roulage et un mode de conduite, lui-même choisi parmi un mode économique, un mode automatique et un mode sportif.

5. Procédé selon l'une des revendications 1 à 4, **caractérisé en ce que** dans ladite étape on estime ladite valeur lorsqu'en outre un conducteur dudit véhicule (V) vient d'augmenter un pourcentage d'enfoncement d'une pédale d'accélérateur dudit véhicule (V) pour signaler qu'il souhaite une accélération complémentaire.

6. Dispositif de contrôle (DC) pour un véhicule (V) comprenant au moins un moyen de stockage d'énergie (MS1) ayant une puissance disponible, et un moteur thermique (MT) et une machine motrice non-thermique (MM) fournissant respectivement des couples pour au moins un train (T1) en consommant respectivement du carburant et de la puissance dudit moyen de stockage d'énergie (MS1), **caractérisé en ce qu'**il comprend des moyens (MC) mettant en œuvre l'étape d'un procédé de contrôle selon l'une des revendications précédentes.

7. Véhicule (V) comprenant au moins un moyen de stockage d'énergie (MS1) ayant une puissance disponible, et un moteur thermique (MT) et une machine motrice non-thermique (MM) fournissant respectivement des couples pour au moins un train (T1) en consommant respectivement du carburant et de la puissance dudit moyen de stockage d'énergie (MS1), **caractérisé en ce qu'**il comprend en outre un dispositif de contrôle (DC) selon la revendication 6.

8. Véhicule selon la revendication 7, **caractérisé en ce que** ladite machine motrice non-thermique (MM) est de type électrique, et ledit moyen de stockage d'énergie (MS1) stocke de l'énergie électrique.

9. Véhicule selon la revendication 7 ou 8, **caractérisé en ce qu'**il est de type automobile.

## Patentansprüche

1. Steuerungsverfahren für ein Fahrzeug (V) mit mindestens einem Energiespeicher (MS1) mit einer verfügbaren Leistung und einer Wärmekraftmaschine (MT) und einer Nicht-Wärmemaschine (MM), die jeweils Drehmomente für mindestens einen Zug (T1) durch Verbrauchen von Kraftstoff bzw. Leistung des Energiespeichermittels (MS1), **dadurch gekennzeichnet, dass** es einen Schritt umfasst, in dem, wenn nur die Wärmekraftmaschine (MT) ein Drehmoment liefert, einen Wert repräsentativ für ein Beschleunigungspotential des Fahrzeugs (V) im Fall der Bereitstellung eines komplementären Drehmoments durch die nicht-thermische Antriebsmaschine (MM) in Abhängigkeit von mindestens einem Parameter des Fahrzeugs (V) geschätzt wird, und diese Bereitstellung des komplementären Drehmoments wird genehmigt, wenn der geschätzte Wert ist größer als ein gewählter Schwellenwert.

2. Verfahren nach Anspruch 1, **dadurch gekennzeichnet, dass** in dem Schritt ein Schwellenwert verwendet wird, der als Funktion eines Prozentsatzes des Niederdrückens eines Gaspedals des Fahrzeugs (V) und/oder eines für das Fahrzeug (V) ausgewählten Betriebsmodus gewählt wird.

3. Verfahren nach Anspruch 1 oder 2, **dadurch gekennzeichnet, dass** in dem Schritt der Wert in Abhängigkeit von mindestens einem Parameter des Fahrzeugs (V) geschätzt wird, der aus mindestens einem technischen Merkmal des Fahrzeugs (V) ausgewählt wird, einer aktuellen Geschwindigkeit von das Fahrzeug (V), einen Gang, der in der Gangwechseleinrichtung (BV) des Fahrzeugs (V) eingelegt ist, eine aktuelle Steigung eines Abschnitts der Fahrbahn, auf der das Fahrzeug fährt (V), ein aktuelles Gewicht des Fahrzeugs (V), meteorologische Informationen, eine Höhe, auf der sich das Fahrzeug befindet (V), ein für das Fahrzeug ausgewählter Betriebsmodus (V), eine Effizienz einer Übertragungskette des Fahrzeugs (V) und ein Reifenrollwiderstand von besagtes Fahrzeug (V).

4. Verfahren nach Anspruch 2 oder 3, **dadurch gekennzeichnet, dass** in dem Schritt der Betriebsmodus des Fahrzeugs (V) aus einem Fahrmodus und einem Fahrmodus ausgewählt wird, der selbst aus einem Sparmodus, einem Automatikmodus und einem Sportmodus ausgewählt wird.

5. Verfahren nach einem der Ansprüche 1 bis 4, **dadurch gekennzeichnet, dass** in dem Schritt der Wert geschätzt wird, wenn zusätzlich ein Fahrer des Fahrzeugs (V) gerade einen Prozentsatz des Niederdrückens eines Gaspedals des Fahrzeugs (V) erhöht hat um anzuzeigen, dass es zusätzliche Beschleunigung wünscht.

6. Steuergerät (DC) für ein Fahrzeug (V), mit mindestens einem Energiespeicher (MS1) mit einer verfügbaren Leistung und einer Wärmekraftmaschine (MT) und einer Nicht-Wärmekraftmaschine (MM), die jeweils Drehmomente für mindestens ein Zug (T1) durch Verbrauchen von Kraftstoff bzw. Leistung der Energiespeichermittel (MS1), **dadurch gekennzeichnet, dass** er Mittel (MC) umfasst, die Schritt ein Steuerverfahren nach einem der vorhergehenden Ansprüche implementieren.

7. Fahrzeug (V), umfassend mindestens ein Energiespeichermittel (MS1) eine verfügbare Leistung aufweist, und eine Wärmekraftmaschine (MT) und eine nicht-thermische Antriebsmaschine (MM), die jeweils die Bereitstellung Momente für mindestens einen Zug (T1) raubend bzw. Brennstoff und Kraft von Udit Energiespeichermitteln (MS1), **dadurch gekennzeichnet, daß** es ferner umfasst eine Steuereinrichtung (CD) nach dem Anspruch 6.

8. Fahrzeug nach Anspruch 7, **dadurch gekennzeichnet, daß** die genannten nicht-thermische Antriebsmaschine (MM) ist der elektrischen Typ, und die die Energiespeichermittel (MS1) speichert elektrische Energie.

9. Fahrzeug nach Anspruch 7 oder 8, **dadurch gekennzeichnet, dass** es vom Automobiltyp ist.

## Claims

1. Control method for a vehicle (V) comprising at least one energy storage means (MS1) having an available power, and a heat engine (MT) and a non-heat engine (MM) respectively supplying torques for au at least one train (T1) by consuming fuel and power respectively of said energy storage means (MS1), **characterized in that** it comprises a step in which, when only said heat engine (MT) provides torque, a value representative of an acceleration potential of said vehicle (V) is estimated in the event of supply of a complementary torque by said non-thermal driving machine (MM), as a function of at least one parameter of said vehicle (V), and this supply of complementary torque is authorized when said estimated value is greater than a chosen threshold.

2. Method according to claim 1, **characterized in that** in said step a threshold is used chosen as a function of a percentage of depression of an accelerator pedal of said vehicle (V) and/or of an operating mode selected for said vehicle (V).

3. Method according to claim 1 or 2, **characterized in that** in said step said value is estimated as a function of at least one parameter of said vehicle (V) chosen from at least one technical characteristic of said vehicle (V), a current speed of said vehicle (V), a gear engaged in gear changing means (BV) of said vehicle (V), a current slope of a portion of the roadway on which said vehicle is traveling (V), a current weight of said vehicle (V), meteorological information, an altitude at which said vehicle is located (V), an operating mode selected for said vehicle (V), an efficiency of a transmission chain of said vehicle (V), and a resistance to the rolling of tires of said vehicle (V).

4. Method according to claim 2 or 3, **characterized in that** in said step said operating mode of the vehicle (V) is chosen from a driving mode and a driving mode, itself chosen from an economy mode, an automatic mode and a sports mode.

5. Method according to one of claims 1 to 4, **characterized in that** in said step said value is estimated when, in addition, a driver of said vehicle (V) has just increased a percentage of depression of an accelerator pedal of said vehicle (V) to indicate that it wants additional acceleration.

6. Control device (DC) for a vehicle (V) comprising at least one energy storage means (MS1) having an available power, and a heat engine (MT) and a non-heat engine (MM) providing respectively torques for at least one train (T1) by consuming respectively fuel and power of said energy storage means (MS1), **characterized in that** it comprises means (MC) implementing step control method according to one of the preceding claims.

7. Vehicle (V) comprising at least one energy storage means (MS1) having an available power, and a thermal engine (MT) and a non-thermal driving machine (MM) respectively providing torques for at least one train (T1) consuming respectively fuel and power of udit energy storage means (MS1), **characterized in that** it further comprises a control device (CD) according to the claim 6.

8. Vehicle according to claim 7, **characterized in that** the said non-thermal driving machine (MM) is of the electrical type, and the said energy storage means (MS1) stores electrical energy.

9. Vehicle according to claim 7 or 8, **characterized in that** it is of the automobile type.
